# EUROPEAN PATENT APPLICATION

(11) **EP 4 836 064 A1**
(43) Date of publication of application: **04.11.2026**
(21) Application number: 24910731.9
(22) Date of filing: 11.12.2024
(51) Int. Cl.: H01M 10/0587, H01M 10/0525

(54) **ELECTRODE ASSEMBLY, ELECTROCHEMICAL APPARATUS AND ELECTRIC DEVICE**

(30) Priority: 28.12.2023 CN 202311843081
(71) Applicant: Ningde Amperex Technology Limited, Ningde, Fujian 352100 (CN)
(72) Inventor: JIN, Fudong, Ningde, Fujian 352100 (CN); WU, Hua, Ningde, Fujian 352100 (CN)
(74) Representative: Kraus & Lederer PartGmbB
(86) International application number: PCT/CN2024/138553
(87) International publication number: WO 2025/139800

(57) **Abstract**

This application provides an electrode assembly, an electrochemical apparatus, and an electric device. The electrode assembly includes a first electrode plate and a second electrode plate having opposite polarities. A first active material layer and a second active material layer of the first electrode plate are respectively disposed on a first surface and a second surface opposite each other of a first current collector. The first active material layer is provided with a first groove and a second groove extending from a bottom wall of the first groove to the first surface. The first surface at a first single-sided bare foil region of the first current collector is exposed in the second groove and covered by the second active material layer on the second surface, so that a volume of the second active material layer is larger. A first tab is accommodated in the second groove and welded to the first single-sided bare foil region to form a weld. A first insulating adhesive layer is accommodated in the first groove and covers the weld. A projection of the first insulating adhesive layer along a thickness direction of the first current collector is located within the first groove. This allows for a smaller overall thickness of the electrode assembly and a higher energy density of the electrochemical apparatus.

## Description

### CROSS-REFERENCE TO RELATED APPLICATIONS

This application claims priority to Chinese Patent Application No. CN202311843081.7, filed on December 28, 2023 and entitled "ELECTRODE ASSEMBLY, ELECTROCHEMICAL APPARATUS, AND ELECTRIC DEVICE", which is incorporated herein by reference in its entirety.

### TECHNICAL FIELD

This application relates to the field of battery technology, and specifically, to an electrode assembly, an electrochemical apparatus, and an electric device.

### BACKGROUND

With the rapid development of electronic information technology, various electronic devices are advancing toward intelligence and multifunctionality, imposing increasingly high requirements on the energy density of batteries.

Currently, an electrochemical apparatus includes two electrode plates. Each electrode plate typically includes a current collector, two active material layers, and a tab. A surface of one active material layer in each electrode plate at a connection point with the tab is provided with a groove. The two active material layers of each electrode plate are respectively provided with two insulating adhesive layers corresponding to the tab of the electrode plate and two insulating adhesive layers corresponding to a tab of another electrode plate. Consequently, after the two electrode plates are wound and formed, the tab of one electrode plate corresponds to four insulating adhesive layers, resulting in a relatively large thickness of an electrode assembly formed by the two electrode plates and a relatively low energy density of the electrochemical apparatus.

### SUMMARY

This application provides an electrode assembly, an electrochemical apparatus, and an electric device, which can effectively increase the energy density of the electrochemical apparatus.

According to a first aspect, this application provides an electrode assembly including a first electrode plate and a second electrode plate having opposite polarities, where the first electrode plate includes: a first current collector having a first surface and a second surface arranged opposite each other; a first active material layer disposed on the first surface, where the first active material layer is provided with a first groove and a second groove extending from a bottom wall of the first groove to the first surface, the first current collector includes a first single-sided bare foil region, and the first surface at the first single-sided bare foil region is exposed in the second groove; a second active material layer disposed on the second surface, where the second surface of the first single-sided bare foil region is covered by the second active material layer; a first tab accommodated in the second groove and welded to the first single-sided bare foil region to form a weld; and a first insulating adhesive layer accommodated in the first groove and covering the weld between the first tab and the first single-sided bare foil region, where a projection of the first insulating adhesive layer along a thickness direction of the first current collector is located within the first groove.

In the above technical solution, the electrode assembly includes the first electrode plate and the second electrode plate having opposite polarities, enabling metal ions to move between the first electrode plate and the second electrode plate, thereby achieving charging and discharging of the electrode assembly. The first electrode plate includes the first current collector, the first active material layer, and the second active material layer, where the first active material layer is disposed on the first surface of the first current collector, and the second active material layer is disposed on the second surface of the first current collector, enabling metal ions to intercalate into or deintercalate from the first active material layer and the second active material layer, thereby achieving movement of metal ions. The first active material layer is provided with the first groove and the second groove extending from the bottom wall of the first groove to the first surface, so that the first surface at the first single-sided bare foil region of the first current collector is exposed in the second groove, the second surface at the first single-sided bare foil region of the first current collector is covered by the second active material layer, and the first tab of the electrode assembly is accommodated in the second groove and welded to the first single-sided bare foil region to form the weld, enabling the second groove to be formed only on the first active material layer of the first electrode plate to accommodate the first tab without forming a groove on the second active material layer, thereby allowing for a larger volume of the second active material layer and a higher energy density of the electrochemical apparatus provided with this electrode assembly. The first insulating adhesive layer of the electrode assembly is accommodated in the first groove and covers the weld between the first tab and the first single-sided bare foil region, so that the first insulating adhesive layer can insulate the first tab from the second electrode plate, thereby reducing the probability of a short circuit between the first electrode plate and the second electrode plate. Since burrs are present on the surface of the first tab, and burrs are also easily formed at the weld between the first tab and the first single-sided bare foil region, the first insulating adhesive layer can also isolate the burrs, making the burrs less likely to come into contact with the second electrode plate and in turn cause a short circuit or damage to the second electrode plate. In addition, the projection of the first insulating adhesive layer along the thickness direction of the first current collector is located within the first groove, so that the first insulating adhesive layer can be accommodated in the first groove along a length direction of the first current collector, thereby allowing for a smaller overall thickness of the electrode assembly, and further allowing for a higher the energy density of the electrochemical apparatus provided with this electrode assembly.

In some embodiments of the first aspect, along the length direction of the first current collector, a width of the first groove is greater than or equal to a width of the first insulating adhesive layer; and along the thickness direction of the first current collector, a depth of the first groove is greater than or equal to a thickness of the first insulating adhesive layer.

Along the length direction of the first current collector, the width of the first groove is greater than or equal to the width of the first insulating adhesive layer; and along the thickness direction of the first current collector, the depth of the first groove is greater than or equal to the thickness of the first insulating adhesive layer. Thus, the first insulating adhesive layer can be accommodated in the first groove, thereby further allowing for a smaller overall thickness of the electrode assembly and a higher energy density of the electrochemical apparatus provided with this electrode assembly.

In some embodiments of the first aspect, along the length direction of the first current collector, the width of the first groove is denoted as W11, and the width of the first insulating adhesive layer is denoted as M1, satisfying 7 mm ≤ W11 ≤ 17 mm, and 5 mm ≤ M1 ≤ 15 mm; and along the thickness direction of the first current collector, the depth of the first groove is denoted as H11, and the thickness of the first insulating adhesive layer is denoted as N1, satisfying 5 µm ≤ H11 ≤ 55 µm, and 5 µm ≤ N1 ≤ 20 µm.

Along the length direction of the first current collector, the width W11 of the first groove satisfies 7 mm ≤ W11 ≤ 17 mm; and along the thickness direction of the first current collector, the depth H11 of the first groove satisfies 5 µm ≤ H11 ≤ 55 µm. This allows a larger portion of the first insulating adhesive layer to be accommodated in the first groove, thereby allowing for a smaller overall thickness of the electrode assembly and a higher energy density of the electrochemical apparatus provided with this electrode assembly. In addition, this allows for a smaller volume loss of the first active material layer and a higher energy density of the electrochemical apparatus provided with this electrode assembly.

Along the length direction of the first current collector, the width M1 of the first insulating adhesive layer satisfies 5 mm ≤ M1 ≤ 15 mm; and along the thickness direction of the first current collector, the thickness N1 of the first insulating adhesive layer satisfies 5 µm ≤ N1 ≤ 20 µm. This allows for a good insulating effect of the first insulating adhesive layer, reducing the probability of a short circuit between the first tab and the second electrode plate. In addition, this allows for a relatively small area of the first active material layer covered by the first insulating adhesive layer, thereby allowing for a higher energy density of the electrochemical apparatus provided with this electrode assembly.

In some embodiments of the first aspect, along the length direction of the first current collector, a width of the second groove is denoted as W12, and a width of the first tab is denoted as P1, satisfying 5 mm ≤ W12 ≤ 15 mm, and 3 mm ≤ P1 ≤ 13 mm.

Along the length direction of the first current collector, the width W12 of the second groove satisfies 5 mm ≤ W12 ≤ 15 mm. This allows the second groove to have sufficient space to accommodate the first tab. In addition, this allows for a smaller volume loss of the first active material layer and a higher energy density of the electrochemical apparatus provided with this electrode assembly.

Along the length direction of the first current collector, the width P1 of the first tab satisfies 3 mm ≤ P1 ≤ 13 mm. This allows the first tab to have a relatively large connection area and a relatively high connection strength with the first current collector. In addition, this allows the first tab to occupy a relatively small space, thereby allowing for a relatively small space required to be reserved in the second groove, a smaller volume loss of the first active material layer, and a higher energy density of the electrochemical apparatus provided with this electrode assembly.

In some embodiments of the first aspect, the second electrode plate includes:
a second current collector having a third surface and a fourth surface arranged opposite each other, where the third surface faces the first active material layer, and the fourth surface faces away from the first active material layer;
a third active material layer disposed on the third surface;
a fourth active material layer disposed on the fourth surface; and
a second insulating adhesive layer disposed on a side of the third active material layer facing away from the second current collector, where when viewed along a thickness direction of the second current collector, a projection of the second insulating adhesive layer covers the first groove.

The second electrode plate includes the second current collector, the third active material layer, and the fourth active material layer, where the third active material layer is disposed on the third surface of the second current collector, and the fourth active material layer is disposed on the fourth surface of the second current collector, enabling metal ions to intercalate into or deintercalate from the third active material layer and the fourth active material layer, thereby achieving movement of metal ions. The second insulating adhesive layer is provided, and the second insulating adhesive layer is disposed on the side of the third active material layer facing away from the second current collector, so that when viewed along the thickness direction of the second current collector, the projection of the second insulating adhesive layer covers the first groove, and the second insulating adhesive layer can insulate the first tab from the second electrode plate, reducing the probability of the burrs on the first tab coming into contact with the second current collector, thereby reducing the probability of a short circuit between the first electrode plate and the second electrode plate.

In some embodiments of the first aspect, the third active material layer is provided with a third groove; the second insulating adhesive layer is accommodated in the third groove; and a projection of the second insulating adhesive layer along the thickness direction of the second current collector is located within the third groove.

The third active material layer is provided with the third groove, so that the second insulating adhesive layer is accommodated in the third groove, and the projection of the second insulating adhesive layer along the thickness direction of the second current collector is located within the third groove. Thus, along a length direction of the second current collector, the second insulating adhesive layer can be accommodated in the third groove, thereby allowing for a smaller overall thickness of the electrode assembly, and further allowing for a higher energy density of the electrochemical apparatus provided with this electrode assembly.

In some embodiments of the first aspect, along the length direction of the second current collector, a width of the third groove is greater than or equal to a width of the second insulating adhesive layer; and along the thickness direction of the second current collector, a depth of the third groove is greater than or equal to a thickness of the second insulating adhesive layer.

Along the length direction of the second current collector, the width of the third groove is greater than or equal to the width of the second insulating adhesive layer; and along the thickness direction of the second current collector, the depth of the third groove is greater than or equal to the thickness of the second insulating adhesive layer, so that the second insulating adhesive layer can be accommodated in the third groove, thereby further allowing for a smaller overall thickness of the electrode assembly and a higher energy density of the electrochemical apparatus provided with this electrode assembly.

In some embodiments of the first aspect, along the length direction of the second current collector, the width of the third groove is denoted as W21, and the width of the second insulating adhesive layer is denoted as M2, satisfying 17 mm ≤ W21 ≤ 27 mm, and 15 mm ≤ M2 ≤ 25 mm; and along the thickness direction of the second current collector, the depth of the third groove is denoted as H21, and the thickness of the second insulating adhesive layer is denoted as N2, satisfying 5 µm ≤ H21 ≤ 55 µm, and 5 µm ≤ N2 ≤ 20 µm.

Along the length direction of the second current collector, the width W21 of the third groove satisfies 17 mm ≤ W21 ≤ 27 mm; and along the thickness direction of the second current collector, the depth H21 of the third groove satisfies 5 µm ≤ H21 ≤ 55 µm. This allows a larger portion of the second insulating adhesive layer to be accommodated in the third groove, thereby allowing for a smaller overall thickness of the electrode assembly and a higher energy density of the electrochemical apparatus provided with this electrode assembly. In addition, this allows for a smaller volume loss of the third active material layer and a higher energy density of the electrochemical apparatus provided with this electrode assembly.

Along the length direction of the second current collector, the width M2 of the second insulating adhesive layer satisfies 15 mm ≤ M2 ≤ 25 mm; and along the thickness direction of the second current collector, the thickness N2 of the second insulating adhesive layer satisfies 5 µm ≤ N2 ≤ 20 µm. This allows for a good insulating effect of the second insulating adhesive layer, reducing the probability of a short circuit between the first tab and the second electrode plate. In addition, this allows for a relatively small area of the third active material layer covered by the second insulating adhesive layer, thereby allowing for a higher energy density of the electrochemical apparatus provided with this electrode assembly.

In some embodiments of the first aspect, the third active material layer is further provided with a fourth groove extending from a bottom wall of the third groove to the third surface; and a projection of the first tab along the thickness direction of the second current collector is located within the fourth groove.

The third active material layer is provided with the fourth groove extending from the bottom wall of the third groove to the third surface, so that the projection of the first tab along the thickness direction of the second current collector is located within the fourth groove, and the fourth groove can be used for accommodating a portion of the first tab, thereby allowing for a smaller overall thickness of the electrode assembly and a higher energy density of the electrochemical apparatus provided with this electrode assembly.

In some embodiments of the first aspect, along the length direction of the second current collector, a width of the fourth groove is denoted as W22, satisfying 4 mm ≤ W22 ≤ 16 mm; and along the thickness direction of the second current collector, a depth of the fourth groove is denoted as H22, satisfying 10 µm ≤ H22 ≤ 60 µm.

Along the length direction of the second current collector, the width W22 of the fourth groove satisfies 4 mm ≤ W22 ≤ 16 mm; and along the thickness direction of the second current collector, the depth H22 of the fourth groove satisfies 10 µm ≤ H22 ≤ 60 µm. This allows the fourth groove to have sufficient space to accommodate the first tab. In addition, this allows for a smaller volume loss of the third active material layer and a higher energy density of the electrochemical apparatus provided with this electrode assembly.

In some embodiments of the first aspect, the third active material layer is provided with a fifth groove extending from the third active material layer to the third surface; the second current collector includes a second single-sided bare foil region; the third surface at the second single-sided bare foil region is exposed in the fifth groove; and the second single-sided bare foil region is covered by the fourth active material layer on the fourth surface; and
the second electrode plate further includes:
a second tab accommodated in the fifth groove and welded to the second single-sided bare foil region to form a weld; and
a third insulating adhesive layer covering the weld between the second tab and the second single-sided bare foil region.

The third active material layer is provided with the fifth groove extending from the third active material layer to the third surface, so that the third surface at the second single-sided bare foil region of the second current collector is exposed in the fifth groove, the second single-sided bare foil region of the second current collector is covered by the fourth active material layer on the fourth surface, and the second tab of the electrode assembly is accommodated in the fifth groove and welded to the second single-sided bare foil region to form the weld, enabling the fifth groove to be formed only on the third active material layer of the second electrode plate to accommodate the second tab without forming a groove on the fourth active material layer, thereby allowing for a larger volume of the fourth active material layer and a higher energy density of the electrochemical apparatus provided with this electrode assembly. The third insulating adhesive layer of the electrode assembly covers the weld between the second tab and the second single-sided bare foil region, so that the third insulating adhesive layer can insulate the second tab from the first electrode plate, thereby reducing the probability of a short circuit between the first electrode plate and the second electrode plate. Since burrs are present on the surface of the second tab, and burrs are also easily formed at the weld between the second tab and the second single-sided bare foil region, the third insulating adhesive layer can also isolate the burrs, making the burrs less likely to come into contact with the first electrode plate and in turn cause a short circuit or damage to the first electrode plate.

In some embodiments of the first aspect, along the length direction of the second current collector, a width of the fifth groove is denoted as W23, and a width of the second tab is denoted as P2, satisfying 5 mm ≤ W23 ≤ 15 mm, and 3 mm ≤ P2 ≤ 13 mm.

Along the length direction of the second current collector, the width W23 of the fifth groove satisfies 5 mm ≤ W23 ≤ 15 mm. This allows the fifth groove to have sufficient space to accommodate the second tab. In addition, this allows for a smaller volume loss of the third active material layer and a higher energy density of the electrochemical apparatus provided with this electrode assembly.

In some embodiments of the first aspect, along the length direction of the second current collector, a width of the third insulating adhesive layer is denoted as M3, satisfying 15 mm ≤ M3 ≤ 25 mm; and along the thickness direction of the second current collector, a thickness of the third insulating adhesive layer is denoted as N3, where 5 µm ≤ N3 ≤ 20 µm.

Along the length direction of the second current collector, the width of the third insulating adhesive layer is denoted as M3, satisfying 15 mm ≤ M3 ≤ 25 mm; and along the thickness direction of the second current collector, the thickness of the third insulating adhesive layer is denoted as N3, where 5 µm ≤ N3 ≤ 20 µm. This allows for a good insulating effect of the third insulating adhesive layer, reducing the probability of a short circuit between the second tab and the first electrode plate. In addition, this allows for a relatively small area of the third active material layer covered by the third insulating adhesive layer, thereby allowing for a higher energy density of the electrochemical apparatus provided with this electrode assembly.

In some embodiments of the first aspect, the first active material layer is further provided with a sixth groove; and when viewed along the thickness direction of the first current collector, a projection of the third insulating adhesive layer covers the sixth groove; and
the first electrode plate further includes:
a fourth insulating adhesive layer accommodated in the sixth groove.

The first active material layer is provided with the sixth groove, so that the fourth insulating adhesive layer of the first electrode plate is accommodated in the sixth groove. This allows for a smaller overall thickness of the electrode assembly, and further allows for a higher energy density of the electrochemical apparatus provided with this electrode assembly. When viewed along the thickness direction of the first current collector, the projection of the third insulating adhesive layer covers the sixth groove, so that the third insulating adhesive layer can insulate the second tab from the first electrode plate, reducing the probability of the burrs on the second tab coming into contact with the first current collector, thereby reducing the probability of a short circuit between the first electrode plate and the second electrode plate.

In some embodiments of the first aspect, along the length direction of the first current collector, a width of the sixth groove is greater than or equal to a width of the fourth insulating adhesive layer; and along the thickness direction of the first current collector, a depth of the sixth groove is greater than or equal to a thickness of the fourth insulating adhesive layer.

Along the length direction of the first current collector, the width of the sixth groove is greater than or equal to the width of the fourth insulating adhesive layer; and along the thickness direction of the first current collector, the depth of the sixth groove is greater than or equal to the thickness of the fourth insulating adhesive layer, so that the fourth insulating adhesive layer can be accommodated in the sixth groove, thereby further allowing for a smaller overall thickness of the electrode assembly and a higher energy density of the electrochemical apparatus provided with this electrode assembly.

In some embodiments of the first aspect, along the length direction of the first current collector, the width of the sixth groove is denoted as W13, and the width of the fourth insulating adhesive layer is denoted as M4, satisfying 7 mm ≤ W13 ≤ 17 mm, and 5 mm ≤ M4 ≤ 15 mm; and along the thickness direction of the first current collector, the depth of the sixth groove is denoted as H12, and the thickness of the fourth insulating adhesive layer is denoted as N4, satisfying 5 µm ≤ H12 ≤ 55 µm, and 5 µm ≤ N4 ≤ 20 µm.

Along the length direction of the first current collector, the width W13 of the sixth groove satisfies 7 mm ≤ W13 ≤ 17 mm; and along the thickness direction of the first current collector, the depth H12 of the sixth groove satisfies 5 µm ≤ H12 ≤ 55 µm. This allows a larger portion of the fourth insulating adhesive layer to be accommodated in the sixth groove, thereby allowing for a smaller overall thickness of the electrode assembly and a higher energy density of the electrochemical apparatus provided with this electrode assembly. In addition, this allows for a smaller volume loss of the first active material layer and a higher energy density of the electrochemical apparatus provided with this electrode assembly.

Along the length direction of the first current collector, the width M4 of the fourth insulating adhesive layer satisfies 5 mm ≤ M4 ≤ 15 mm; and along the thickness direction of the first current collector, the thickness N4 of the fourth insulating adhesive layer satisfies 5 µm ≤ N4 ≤ 20 µm. This allows for a good insulating effect of the fourth insulating adhesive layer, reducing the probability of a short circuit between the second tab and the first electrode plate. In addition, this allows for a relatively small area of the first active material layer covered by the fourth insulating adhesive layer, thereby allowing for a higher energy density of the electrochemical apparatus provided with this electrode assembly.

In some embodiments of the first aspect, the first active material layer is further provided with a seventh groove extending from a bottom wall of the sixth groove to the first surface; and a projection of the second tab along the thickness direction of the first current collector is located within the seventh groove.

The first active material layer is further provided with the seventh groove extending from the bottom wall of the sixth groove to the first surface, so that the projection of the second tab along the thickness direction of the first current collector is located within the seventh groove, and the seventh groove can be used for accommodating a portion of the second tab, thereby allowing for a smaller overall thickness of the electrode assembly and a higher energy density of the electrochemical apparatus provided with this electrode assembly.

In some embodiments of the first aspect, along the length direction of the first current collector, a width of the seventh groove is denoted as W14, satisfying 4 mm ≤ W14 ≤ 16 mm; and along the thickness direction of the first current collector, a depth of the seventh groove is denoted as H13, satisfying 10 µm ≤ H13 ≤ 60 µm.

Along the length direction of the first current collector, the width W14 of the seventh groove satisfies 4 mm ≤ W14 ≤ 16 mm; and along the thickness direction of the first current collector, the depth H13 of the seventh groove satisfies 10 µm ≤ H13 ≤ 60 µm. This allows the seventh groove to have sufficient space to accommodate the second tab. In addition, this allows for a smaller volume loss of the first active material layer and a higher energy density of the electrochemical apparatus provided with this electrode assembly.

In some embodiments of the first aspect, the first electrode plate is a negative electrode plate, and the second electrode plate is a positive electrode plate.

In some embodiments of the first aspect, the first tab is formed on the first current collector by laser welding, and the second tab is formed on the second current collector by laser welding.

The laser welding method, compared to conventional ultrasonic welding, can form a groove only on the first active material layer and form no groove on the second active material layer, so that the first insulating adhesive layer is required to be disposed only on the first active material layer corresponding to the first tab. This is conducive to reducing the thickness of the first electrode plate and increasing the energy density.

In some embodiments of the first aspect, the first tab is a negative electrode tab; the second tab is a positive electrode tab; the fifth groove includes a first sub-groove and a second sub-groove; a projection of the second sub-groove along the thickness direction of the second current collector is located within the first sub-groove; along a width direction of the first tab, a distance between a side of the first tab and a corresponding groove wall of the first groove is denoted as a; and along a width direction of the second tab, a distance between a side of the second tab and a corresponding groove wall of the second sub-groove is denoted as b; where a and b satisfy: b < a.

During laser welding of tabs, heat is generated, which has a thermal impact on an active material surrounding the tabs, causing the active material to fall off. Therefore, gaps are required to be provided between the tabs and the corresponding groove walls. Due to different materials of current collectors and tabs of a positive electrode and a negative electrode, a higher temperature is required for welding the negative electrode tab, and thus a larger gap is required, that is, b < a.

In some embodiments of the first aspect, a ≥ 0.2 mm, and b ≥ 0.2 mm.

By limiting a ≥ 0.2 mm and b ≥ 0.2 mm, the impact of the heat generated during laser welding of the tabs on the surrounding active material is controlled.

According to a second aspect, this application provides an electrochemical apparatus including the above electrode assembly.

According to a third aspect, this application provides an electric device including the above electrochemical apparatus, where the electrochemical apparatus is configured to provide electrical energy.

### BRIEF DESCRIPTION OF DRAWINGS

To more clearly illustrate the technical solutions of some embodiments of this application, the drawings required for describing these embodiments are briefly described below. It should be understood that the following drawings illustrate only some embodiments of this application and should not be considered as limiting the scope. For those skilled in the art, other related drawings can be obtained based on these drawings without creative effort.
FIG. 1 is a schematic structural cross-sectional view of an electrode assembly according to some embodiments of this application;
FIG. 2 is a partially enlarged schematic structural diagram of position A in the electrode assembly in FIG. 1;
FIG. 3 is a schematic structural cross-sectional view of an electrode assembly according to some other embodiments of this application;
FIG. 4 is a partially enlarged schematic structural diagram of position B in the electrode assembly in FIG. 3;
FIG. 5 is a partially enlarged schematic structural diagram of position C in the electrode assembly in FIG. 3;
FIG. 6 is a schematic structural cross-sectional view of an electrode assembly according to some other embodiments of this application; and
FIG. 7 is a schematic structural cross-sectional view of an electrode assembly according to some other embodiments of this application.

Reference signs: 10. electrode assembly; 100. first electrode plate; 110. first current collector; 111. first surface; 112. second surface; 113. first single-sided bare foil region; 120. first active material layer; 121. first groove; 122. second groove; 123. sixth groove; 124. seventh groove; 130. second active material layer; 140. first tab; 150. first insulating adhesive layer; 160. fourth insulating adhesive layer; 200. second electrode plate; 210. second current collector; 211. third surface; 212. fourth surface; 213. second single-sided bare foil region; 220. third active material layer; 221. third groove; 222. fourth groove; 223. fifth groove; 2231. first sub-groove; 2232. second sub-groove; 230. fourth active material layer; 240. second insulating adhesive layer; 250. second tab; and 260. third insulating adhesive layer.

### DETAILED DESCRIPTION

To make the objectives, technical solutions, and advantages of this application clearer, the technical solutions in some embodiments of this application are described clearly below in conjunction with the drawings in these embodiments of this application. Apparently, the described embodiments are only some rather than all of these embodiments of this application. Based on these embodiments in this application, all other embodiments obtained by those of ordinary skill in the art fall within the protection scope of this application.

Unless otherwise defined, all technical and scientific terms used in this application have the same meaning as commonly understood by those skilled in the art of this application. The terms used in the specification of this application are only for the purpose of describing specific embodiments and are not intended to limit this application. The terms "include" and "have" in the specification, claims, and the above description of the drawings of this application, as well as any variations thereof, are intended to cover non-exclusive inclusions.

The terms "first", "second", and the like in the specification, claims, or the above drawings of this application are used to distinguish different objects rather than to indicate a particular order or relative importance.

Reference to "embodiment" in this application means that specific features, structures, or characteristics described with reference to this embodiment may be included in at least one embodiment of this application. The word "embodiment" appearing in various places in this specification does not necessarily refer to the same embodiment or an independent or alternative embodiment that is exclusive of other embodiments.

In some embodiments of this application, the same reference signs denote the same components; and for brevity, detailed descriptions of the same components are omitted in different embodiments. It should be understood that as shown in the accompanying drawings, dimensions such as thicknesses, lengths, and widths of various members and dimensions such as overall thicknesses, lengths, and widths of integrated apparatuses in these embodiments of this application are merely for illustrative purposes and should not constitute any limitations on this application.

An electrochemical apparatus includes a housing, an electrode assembly, and an electrolyte. The housing is configured to accommodate the electrode assembly and the electrolyte. The electrode assembly includes a positive electrode plate, a negative electrode plate, and a separator. A battery cell operates primarily by the movement of metal ions between the positive electrode plate and the negative electrode plate. The positive electrode plate includes a positive electrode current collector and a positive electrode material layer. The positive electrode material layer is applied on a surface of the positive electrode current collector. A portion of the positive electrode current collector not coated with the positive electrode material layer is provided with a positive electrode tab. The positive electrode tab is configured to input or output electrical energy of the positive electrode plate. With a lithium-ion battery as an example, a material of the positive electrode current collector may be aluminum, and the positive electrode active material may be lithium cobaltate, lithium iron phosphate, ternary materials, lithium manganate, or the like. The negative electrode plate includes a negative electrode current collector and a negative electrode active material layer. The negative electrode active material layer is applied on a surface of the negative electrode current collector. A portion of the negative electrode current collector not coated with the negative electrode active material layer is provided with a negative electrode tab. The negative electrode tab is configured to input or output electrical energy of the negative electrode plate. A material of the negative electrode current collector may be copper, and the negative electrode active material may be a carbon material, a silicon material, or the like. A material of the separator may be polypropylene (PP), polyethylene (PE), or the like. In addition, the electrode assembly may be a wound structure or a laminated structure, which is not limited by these embodiments of this application.

With the development of the new energy industry, batteries are gradually advancing toward high energy density and high power density. However, in an existing electrode assembly, a positive electrode plate or a negative electrode plate typically includes a current collector, two active material layers disposed on two opposite sides of the current collector, and a tab. The active material layer needs to be provided with a groove to accommodate the tab, such that the tab is connected to the current collector. However, due to previous process limitations, for example, an ultrasonic welding method is used to form grooves, two opposite grooves can only be formed simultaneously on two active material layers, with the tab accommodated in only one groove.

To insulate the positive electrode plate from the negative electrode plate, the two active material layers are respectively provided with two insulating adhesive layers covering the two grooves. To mitigate lithium precipitation issues in an electrochemical apparatus, an area of the active material layer of the positive electrode plate needs to be smaller than an area of the negative electrode plate. Therefore, the two active material layers of the positive electrode plate are further provided with two insulating adhesive layers corresponding to the negative electrode tab. The two insulating adhesive layers can further isolate the negative electrode tab from the current collector of the positive electrode plate. In addition, to further isolate the positive electrode tab from the negative electrode plate, the two active material layers of the negative electrode plate are further provided with two insulating adhesive layers corresponding to the positive electrode tab.

After the electrode assembly is wound and formed, the tab of each electrode plate is correspondingly provided with four insulating adhesive layers, resulting in a relatively large thickness of the electrode assembly and a relatively low energy density of the electrochemical apparatus.

To increase the energy density of the electrochemical apparatus, this application provides an electrode assembly. The electrode assembly includes a first electrode plate and a second electrode plate having opposite polarities. The first electrode plate includes a first current collector, a first active material layer, a second active material layer, a first tab, and a first insulating adhesive layer. The first current collector has a first surface and a second surface arranged opposite each other. The first active material layer is disposed on the first surface. The first active material layer is provided with a first groove and a second groove extending from a bottom wall of the first groove to the first surface. The first current collector includes a first single-sided bare foil region. The first surface at the first single-sided bare foil region is exposed in the second groove. The second active material layer is disposed on the second surface. The second surface at the first single-sided bare foil region is covered by the second active material layer. The first tab is accommodated in the second groove and welded to the first single-sided bare foil region to form a weld. The first insulating adhesive layer is accommodated in the first groove and covers the weld between the first tab and the first single-sided bare foil region. A projection of the first insulating adhesive layer along a thickness direction of the first current collector is located within the first groove.

In the electrode assembly with this structure, the electrode assembly includes the first electrode plate and the second electrode plate having opposite polarities, enabling metal ions to move between the first electrode plate and the second electrode plate, thereby achieving charging and discharging of the electrode assembly. The first electrode plate includes the first current collector, the first active material layer, and the second active material layer, where the first active material layer is disposed on the first surface of the first current collector, and the second active material layer is disposed on the second surface of the first current collector, enabling metal ions to intercalate into or deintercalate from the first active material layer and the second active material layer, thereby achieving movement of metal ions. The first active material layer is provided with the first groove and the second groove extending from the bottom wall of the first groove to the first surface, so that the first surface at the first single-sided bare foil region of the first current collector is exposed in the second groove, the second surface at the first single-sided bare foil region of the first current collector is covered by the second active material layer, and the first tab of the electrode assembly is accommodated in the second groove and welded to the first single-sided bare foil region to form the weld, enabling the second groove to be formed only on the first active material layer of the first electrode plate to accommodate the first tab without forming a groove on the second active material layer, thereby allowing for a larger volume of the second active material layer and a higher energy density of the electrochemical apparatus provided with this electrode assembly. The first insulating adhesive layer of the electrode assembly is accommodated in the first groove and covers the weld between the first tab and the first single-sided bare foil region, so that the first insulating adhesive layer can insulate the first tab from the second electrode plate, thereby reducing the probability of a short circuit between the first electrode plate and the second electrode plate. Since burrs are present on the surface of the first tab, and burrs are also easily formed at the weld between the first tab and the first single-sided bare foil region, the first insulating adhesive layer can also isolate the burrs, making the burrs less likely to come into contact with the second electrode plate and in turn cause a short circuit or damage to the second electrode plate. In addition, the projection of the first insulating adhesive layer along the thickness direction of the first current collector is located within the first groove, so that the first insulating adhesive layer can be accommodated in the first groove along a length direction of the first current collector, thereby allowing for a smaller overall thickness of the electrode assembly, and further allowing for a higher energy density of the electrochemical apparatus provided with this electrode assembly.

An embodiment of this application provides an electrochemical apparatus including an electrode assembly, where the electrochemical apparatus may be a secondary battery or a primary battery, such as a lithium-ion battery, a sodium-ion battery, or a magnesium-ion battery, which is not limited by this embodiment of this application. The electrochemical apparatus may be cylindrical, flat, cuboid, or of other shapes, which is not limited by this embodiment of this application.

An embodiment of this application provides an electric device using the electrochemical apparatus as a power source, where the electric device may include but is not limited to a mobile phone, a tablet, a laptop, an electric toy, an electric tool, an electric bicycle, an electric vehicle, a ship, and a spacecraft.

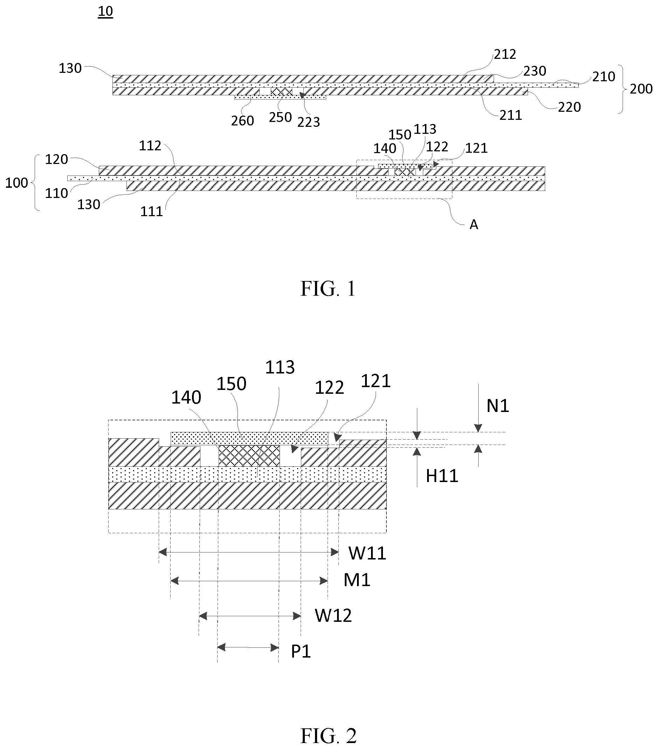

Referring to FIG. 1 and FIG. 2, FIG. 1 is a schematic structural cross-sectional view of an electrode assembly according to some embodiments of this application. FIG. 2 is a partially enlarged schematic structural diagram of position A in the electrode assembly in FIG. 1.

An embodiment of this application provides an electrode assembly 10 including a first electrode plate 100 and a second electrode plate 200 having opposite polarities. The first electrode plate 100 includes a first current collector 110, a first active material layer 120, a second active material layer 130, a first tab 140, and a first insulating adhesive layer 150. The first current collector 110 has a first surface 111 and a second surface 112 arranged opposite each other. The first active material layer 120 is disposed on the first surface 111. The first active material layer 120 is provided with a first groove 121 and a second groove 122 extending from a bottom wall of the first groove 121 to the first surface 111. The first current collector 110 includes a first single-sided bare foil region 113. The first surface 111 at the first single-sided bare foil region 113 is exposed in the second groove 122. The second active material layer 130 is disposed on the second surface 112. The second surface 112 at the first single-sided bare foil region 113 is covered by the second active material layer 130. The first tab 140 is accommodated in the second groove 122 and welded to the first single-sided bare foil region 113 to form a weld. The first insulating adhesive layer 150 is accommodated in the first groove 121 and covers the weld between the first tab 140 and the first single-sided bare foil region 113. A projection of the first insulating adhesive layer 150 along a thickness direction of the first current collector 110 is located within the first groove 121.

In some embodiments, the first single-sided bare foil region 113 is a segment of the first current collector 110 and has the first surface 111 and the second surface 112.

In some embodiments, the first tab 140 is made of a metal material, such as copper or aluminum. The first tab 140 is made of the same material as the first current collector 110 to facilitate welding of the first tab 140 to the first current collector 110.

In some embodiments, the welding of the first tab 140 to the first current collector 110 may be laser welding.

The electrode assembly 10 includes the first electrode plate 100 and the second electrode plate 200 having opposite polarities, enabling metal ions to move between the first electrode plate 100 and the second electrode plate 200, thereby achieving charging and discharging of the electrode assembly 10. The first electrode plate 100 includes the first current collector 110, the first active material layer 120, and the second active material layer 130, where the first active material layer 120 is disposed on the first surface 111 of the first current collector 110, and the second active material layer 130 is disposed on the second surface 112 of the first current collector 110, enabling metal ions to intercalate into or deintercalate from the first active material layer 120 and the second active material layer 130, thereby achieving movement of metal ions. The first active material layer 120 is provided with the first groove 121 and the second groove 122 extending from the bottom wall of the first groove 121 to the first surface 111, so that the first surface 111 at the first single-sided bare foil region 113 of the first current collector 110 is exposed in the second groove 122, the second surface 112 at the first single-sided bare foil region 113 of the first current collector 110 is covered by the second active material layer 130, and the first tab 140 of the electrode assembly 10 is accommodated in the second groove 122 and welded to the first single-sided bare foil region 113 to form the weld, enabling the second groove 122 to be formed only on the first active material layer 120 of the first electrode plate 100 to accommodate the first tab 140 without forming a groove on the second active material layer 130, thereby allowing for a larger volume of the second active material layer 130 and a higher energy density of the electrochemical apparatus provided with this electrode assembly 10. The first insulating adhesive layer 150 of the electrode assembly 10 is accommodated in the first groove 121 and covers the weld between the first tab 140 and the first single-sided bare foil region 113, so that the first insulating adhesive layer 150 can insulate the first tab 140 from the second electrode plate 200, thereby reducing the probability of a short circuit between the first electrode plate 100 and the second electrode plate 200. Since burrs are present on the surface of the first tab 140, and burrs are also easily formed at the weld between the first tab 140 and the first single-sided bare foil region 113, the first insulating adhesive layer 150 can also isolate the burrs, making the burrs less likely to come into contact with the second electrode plate 200 and in turn cause a short circuit or damage to the second electrode plate 200. In addition, the projection of the first insulating adhesive layer 150 along the thickness direction of the first current collector 110 is located within the first groove 121, so that the first insulating adhesive layer 150 can be accommodated in the first groove 121 along a length direction of the first current collector 110, thereby allowing for a smaller overall thickness of the electrode assembly 10, and further allowing for a higher energy density of the electrochemical apparatus provided with this electrode assembly 10.

In some embodiments, the first tab 140 is formed on the first current collector 110 by laser welding, and the second tab 250 is formed on the second current collector 210 by laser welding.

The laser welding method, compared to conventional ultrasonic welding, can form a groove only on the first active material layer 120 and form no groove on the second active material layer 130, so that the first insulating adhesive layer 150 is required to be disposed only on the first active material layer 120 corresponding to the first tab 140. This is conducive to reducing the thickness of the first electrode plate 100 and increasing the energy density.

In some embodiments, along the length direction of the first current collector 110, a width of the first groove 121 is greater than or equal to a width of the first insulating adhesive layer 150, that is, M1 ≤ W11. Along the thickness direction of the first current collector 110, a depth of the first groove 121 is greater than or equal to a thickness of the first insulating adhesive layer 150, that is, N1 ≤ H11.

Along the length direction of the first current collector 110, the width of the first groove 121 is greater than or equal to the width of the first insulating adhesive layer 150. Along the thickness direction of the first current collector 110, the depth of the first groove 121 is greater than or equal to the thickness of the first insulating adhesive layer 150. Thus, the first insulating adhesive layer 150 can be accommodated in the first groove 121, thereby further allowing for a smaller overall thickness of the electrode assembly 10 and a higher energy density of the electrochemical apparatus provided with this electrode assembly 10.

In some other embodiments, along the thickness direction of the first current collector 110, the depth of the first groove 121 may alternatively be less than the thickness of the first insulating adhesive layer 150, so that a portion of the first insulating adhesive layer 150 can be accommodated in the first groove 121. Compared to an electrode plate without the first groove 121, the overall thickness of the first electrode plate 100 in this embodiment is smaller, increasing the energy density of the electrochemical apparatus.

In some embodiments, along the length direction of the first current collector 110, the width W11 of the first groove 121 satisfies 7 mm ≤ W11 ≤ 17 mm. For example, W11 may be 7 mm, 12 mm, or 17 mm. Along the thickness direction of the first current collector 110, the depth H11 of the first groove 121 satisfies 5 µm ≤ H11 ≤ 55 µm. For example, H11 may be 5 µm, 30 µm, or 55 µm.

Along the length direction of the first current collector 110, the width W11 of the first groove 121 satisfies 7 mm ≤ W11 ≤ 17 mm; and along the thickness direction of the first current collector 110, the depth H11 of the first groove 121 satisfies 5 µm ≤ H11 ≤ 55 µm. This allows a larger portion of the first insulating adhesive layer 150 to be accommodated in the first groove 121, thereby allowing for a smaller overall thickness of the electrode assembly 10 and a higher energy density of the electrochemical apparatus provided with this electrode assembly 10. In addition, this allows for a smaller volume loss of the first active material layer 120 and a higher energy density of the electrochemical apparatus provided with this electrode assembly 10.

In some embodiments, along the length direction of the first current collector 110, the width M1 of the first insulating adhesive layer 150 satisfies 5 mm ≤ M1 ≤ 15 mm. For example, M1 may be 5 mm, 10 mm, or 15 mm. Along the thickness direction of the first current collector 110, the thickness N1 of the first insulating adhesive layer 150 satisfies 5 µm ≤ N1 ≤ 20 µm. For example, N1 may be 5 µm, 12 µm, or 20 µm.

Along the length direction of the first current collector 110, the width M1 of the first insulating adhesive layer 150 satisfies 5 mm ≤ M1 ≤ 15 mm; and along the thickness direction of the first current collector 110, the thickness N1 of the first insulating adhesive layer 150 satisfies 5 µm ≤ N1 ≤ 20 µm. This allows for a good insulating effect of the first insulating adhesive layer 150, reducing the probability of a short circuit between the first tab 140 and the second electrode plate 200. In addition, this allows for a relatively small area of the first active material layer 120 covered by the first insulating adhesive layer 150, thereby allowing for a higher energy density of the electrochemical apparatus provided with this electrode assembly 10.

In some embodiments, along the length direction of the first current collector 110, a width of the second groove 122 is denoted as W12, and a width of the first tab 140 is denoted as P1, satisfying 5 mm ≤ W12 ≤ 15 mm, and 3 mm ≤ P1 ≤ 13 mm. For example, W12 may be 5 mm, 9 mm, or 15 mm; and P1 may be 3 mm, 8 mm, or 13 mm.

Along the length direction of the first current collector 110, the width W12 of the second groove 122 satisfies 5 mm ≤ W12 ≤ 15 mm. This allows the second groove 122 to have sufficient space to accommodate the first tab 140. In addition, this allows for a smaller volume loss of the first active material layer 120 and a higher energy density of the electrochemical apparatus provided with this electrode assembly 10.

Along the length direction of the first current collector 110, the width P1 of the first tab 140 satisfies 3 mm ≤ P1 ≤ 13 mm. This allows the first tab 140 to have a relatively large connection area and a relatively high strength with the first current collector 110. In addition, this allows the first tab 140 to occupy a relatively small space, thereby allowing for a relatively small space required to be reserved in the second groove 122, a smaller volume loss of the first active material layer 120, and a higher energy density of the electrochemical apparatus provided with this electrode assembly 10.

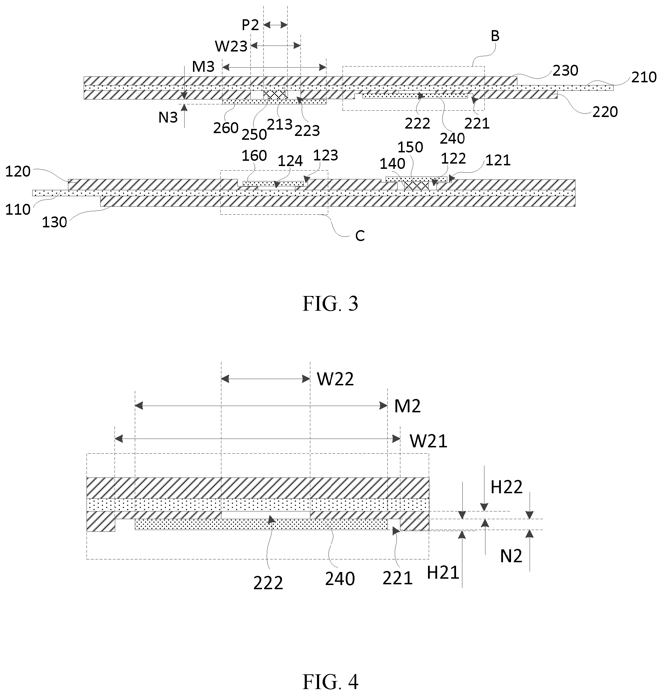

Referring to FIG. 3 and FIG. 4, FIG. 3 is a schematic structural cross-sectional view of an electrode assembly according to some other embodiments of this application. FIG. 4 is a partially enlarged schematic structural diagram of position B in the electrode assembly in FIG. 3.

An embodiment of this application provides an electrode assembly 10 including a first electrode plate 100 and a second electrode plate 200 having opposite polarities. The first electrode plate 100 includes a first current collector 110, a first active material layer 120, a second active material layer 130, a first tab 140, and a first insulating adhesive layer 150. The first active material layer 120 and the second active material layer 130 are respectively disposed on two surfaces of the first current collector 110. The first active material layer 120 is provided with a first groove 121 and a second groove 122. The first tab 140 is accommodated in the second groove 122 and welded to a first single-sided bare foil region 113. The first insulating adhesive layer 150 is accommodated in the first groove 121 and covers a weld between the first tab 140 and the first single-sided bare foil region 113. The structures of the first groove 121 and the second groove 122 are similar to those in the electrode assembly of the foregoing embodiments and are not repeated here.

In some embodiments, the second electrode plate 200 includes a second current collector 210, a third active material layer 220, a fourth active material layer 230, and a second insulating adhesive layer 240. The second current collector 210 has a third surface 211 and a fourth surface 212 arranged opposite each other. The third surface 211 faces the first active material layer 120. The fourth surface 212 faces away from the first active material layer 120. The third active material layer 220 is disposed on the third surface 211. The fourth active material layer 230 is disposed on the fourth surface 212. The second insulating adhesive layer 240 is disposed on a side of the third active material layer 220 facing away from the second current collector 210. When viewed along a thickness direction of the second current collector 210, a projection of the second insulating adhesive layer 240 covers the first groove 121.

The third active material layer 220 is disposed on the third surface 211 of the second current collector 210, and the fourth active material layer 230 is disposed on the fourth surface 212 of the second current collector 210, enabling metal ions to intercalate into or deintercalate from the third active material layer 220 and the fourth active material layer 230, thereby achieving movement of metal ions. The second insulating adhesive layer 240 is provided, and the second insulating adhesive layer 240 is disposed on the side of the third active material layer 220 facing away from the second current collector 210, so that when viewed along the thickness direction of the second current collector 210, the projection of the second insulating adhesive layer 240 covers the first groove 121, and the second insulating adhesive layer 240 can insulate the first tab 140 from the second electrode plate 200, reducing the probability of the burrs on the first tab 140 coming into contact with the second current collector 210, thereby reducing the probability of a short circuit between the first electrode plate 100 and the second electrode plate 200.

In some embodiments, the third active material layer 220 is provided with a third groove 221; the second insulating adhesive layer 240 is accommodated in the third groove 221; and a projection of the second insulating adhesive layer 240 along the thickness direction of the second current collector 210 is located within the third groove 221.

The third active material layer 220 is provided with the third groove 221, so that the second insulating adhesive layer 240 is accommodated in the third groove 221, and the projection of the second insulating adhesive layer 240 along the thickness direction of the second current collector 210 is located within the third groove 221. Thus, along a length direction of the second current collector 210, the second insulating adhesive layer 240 can be accommodated in the third groove 221, thereby allowing for a smaller overall thickness of the electrode assembly 10, and further allowing for a higher energy density of the electrochemical apparatus provided with this electrode assembly 10.

In some embodiments, along the length direction of the second current collector 210, a width of the third groove 221 is greater than or equal to a width of the second insulating adhesive layer 240, that is, M2 ≤ W21. Along the thickness direction of the second current collector 210, a depth of the third groove 221 is greater than or equal to a thickness of the second insulating adhesive layer 240, that is, N2 ≤ H21.

Along the length direction of the second current collector 210, the width of the third groove 221 is greater than or equal to the width of the second insulating adhesive layer 240; and along the thickness direction of the second current collector 210, the depth of the third groove 221 is greater than or equal to the thickness of the second insulating adhesive layer 240, so that the second insulating adhesive layer 240 can be accommodated in the third groove 221, thereby further allowing for a smaller overall thickness of the electrode assembly 10 and a higher energy density of the electrochemical apparatus provided with this electrode assembly 10.

In some other embodiments, along the thickness direction of the second current collector 210, the depth of the third groove 221 may alternatively be less than the thickness of the second insulating adhesive layer 240, so that a portion of the second insulating adhesive layer 240 can be accommodated in the third groove 221. Compared to an electrode plate without the third groove 221, the overall thickness of the first electrode plate 100 in this embodiment is smaller, increasing the energy density of the electrochemical apparatus.

In some embodiments, along the length direction of the second current collector 210, the width W21 of the third groove 221 satisfies 17 mm ≤ W21 ≤ 27 mm. For example, W21 may be 17 mm, 22 mm, or 27 mm. Along the thickness direction of the second current collector 210, the depth H21 of the third groove 221 satisfies 5 µm ≤ H21 ≤ 55 µm. For example, H21 may be 5 µm, 35 µm, or 55 µm.

Along the length direction of the second current collector 210, the width W21 of the third groove 221 satisfies 17 mm ≤ W21 ≤ 27 mm; and along the thickness direction of the second current collector 210, the depth H21 of the third groove 221 satisfies 5 µm ≤ H21 ≤ 55 µm. This allows a larger portion of the second insulating adhesive layer 240 to be accommodated in the third groove 221, thereby allowing for a smaller overall thickness of the electrode assembly 10 and a higher energy density of the electrochemical apparatus provided with this electrode assembly 10. In addition, this allows for a smaller volume loss of the third active material layer 220 and a higher energy density of the electrochemical apparatus provided with this electrode assembly 10.

In some embodiments, along the length direction of the second current collector 210, the width of the second insulating adhesive layer 240 is denoted as M2, satisfying 5 mm ≤ M2 ≤ 25 mm. For example, M2 may be 15 mm, 20 mm, or 25 mm. Along the thickness direction of the second current collector 210, the thickness of the second insulating adhesive layer 240 is denoted as N2, satisfying 5 µm ≤ N2 ≤ 20 µm. For example, N2 may be 5 µm, 12 µm, or 20 µm.

Along the length direction of the second current collector 210, the width M2 of the second insulating adhesive layer 240 satisfies 15 mm ≤ M2 ≤ 25 mm; and along the thickness direction of the second current collector 210, the thickness N2 of the second insulating adhesive layer 240 satisfies 5 µm ≤ N2 ≤ 20 µm. This allows for a good insulating effect of the second insulating adhesive layer 240, reducing the probability of a short circuit between the first tab 140 and the second electrode plate 200. In addition, this allows for a relatively small area of the third active material layer 220 covered by the second insulating adhesive layer 240, thereby allowing for a higher energy density of the electrochemical apparatus provided with this electrode assembly 10.

In some embodiments, the third active material layer 220 is further provided with a fourth groove 222 extending from a bottom wall of the third groove 221 to the third surface 211; and a projection of the first tab 140 along the thickness direction of the second current collector 210 is located within the fourth groove 222.

The third active material layer 220 is provided with the fourth groove 222 extending from the bottom wall of the third groove 221 to the third surface 211, so that the projection of the first tab 140 along the thickness direction of the second current collector 210 is located within the fourth groove 222, and the first electrode plate 100 and the second electrode plate 200 are stacked. In addition, when the thickness of the first tab 140 is greater than the thickness of the first active material layer 120, the fourth groove 222 can be used for accommodating a portion of the first tab 140, thereby allowing for a smaller overall thickness of the electrode assembly 10 and a higher energy density of the electrochemical apparatus provided with this electrode assembly 10.

In some embodiments, along the length direction of the second current collector 210, a width of the fourth groove 222 is denoted as W22, satisfying 4 mm ≤ W22 ≤ 16 mm. For example, W22 may be 4 mm, 12 mm, or 16 mm. Along the thickness direction of the second current collector 210, a depth of the fourth groove 222 is denoted as H22, satisfying 10 µm ≤ H22 ≤ 60 µm. For example, H22 may be 10 µm, 35 µm, or 60 µm.

Along the length direction of the second current collector 210, the width W22 of the fourth groove 222 satisfies 4 mm ≤ W22 ≤ 16 mm; and along the thickness direction of the second current collector 210, the depth H22 of the fourth groove 222 satisfies 10 µm ≤ H22 ≤ 60 µm. This allows the fourth groove 222 to have sufficient space to accommodate the first tab 140. In addition, this allows for a smaller volume loss of the third active material layer 220 and a higher energy density of the electrochemical apparatus provided with this electrode assembly 10.

In some embodiments, the third active material layer 220 is provided with a fifth groove 223 extending from the third active material layer 220 to the third surface 211; the second current collector 210 includes a second single-sided bare foil region 213; the third surface 211 at the second single-sided bare foil region 213 is exposed in the fifth groove 223; and the second single-sided bare foil region 213 is covered by the fourth active material layer 230 on the fourth surface 212.

The second electrode plate 200 further includes a second tab 250 and a third insulating adhesive layer 260. The second tab 250 is accommodated in the fifth groove 223 and welded to the second single-sided bare foil region 213 to form a weld. The third insulating adhesive layer 260 covers the weld between the second tab 250 and the second single-sided bare foil region 213.

In some embodiments, the second tab 250 is made of a metal material, such as copper or aluminum. The second tab 250 is made of the same material as the second current collector 210 to facilitate welding of the second tab 250 to the second current collector 210.

In some embodiments, the first tab 250 is a negative electrode tab. The second tab 250 is a positive electrode tab. The fifth groove 223 includes a first sub-groove 2231 and a second sub-groove 2232. A projection of the second sub-groove 2232 along the thickness direction of the second current collector 210 is located within the first sub-groove 2231. Along a width direction of the first tab 250, a distance between a side of the first tab 250 and a corresponding groove wall of the first groove 121 is denoted as a; and along a width direction of the second tab 250, a distance between a side of the second tab 250 and a corresponding groove wall of the second sub-groove 2232 is denoted as b; where a and b satisfy: b < a.

During laser welding of tabs, heat is generated, which has a thermal impact on an active material surrounding the tabs, causing the active material to fall off. Therefore, gaps are required to be provided between the tabs and the corresponding groove walls. Due to different materials of current collectors and tabs of a positive electrode and a negative electrode, a higher temperature is required for welding the negative electrode tab, and thus a larger gap is required, that is, b < a.

In some embodiments, a ≥ 0.2 mm, and b ≥ 0.2 mm.

By limiting a ≥ 0.2 mm and b ≥ 0.2 mm, the impact of the heat generated during laser welding of the tabs on the surrounding active material layer is controlled. When a < 0.2 mm and b < 0.2 mm, the active material layer is affected by the heat generated during laser welding, causing the active material layer to fall off, thus leading to the issues of lithium precipitation and reduced energy density.

The third active material layer 220 is provided with the fifth groove 223 extending from the third active material layer 220 to the third surface 211, so that the third surface 211 at the second single-sided bare foil region 213 of the second current collector 210 is exposed in the fifth groove 223, the second single-sided bare foil region 213 of the second current collector 210 is covered by the fourth active material layer 230 on the fourth surface 212, and the second tab 250 of the electrode assembly 10 is accommodated in the fifth groove 223 and welded to the second single-sided bare foil region 213 to form the weld, enabling the fifth groove 223 to be formed only on the third active material layer 220 of the second electrode plate 200 to accommodate the second tab 250 without forming a groove on the fourth active material layer 230, thereby allowing for a larger volume of the fourth active material layer 230 and a higher energy density of the electrochemical apparatus provided with this electrode assembly 10. The third insulating adhesive layer 260 of the electrode assembly 10 covers the weld between the second tab 250 and the second single-sided bare foil region 213, so that the third insulating adhesive layer 260 can insulate the second tab 250 from the first electrode plate 100, thereby reducing the probability of a short circuit between the first electrode plate 100 and the second electrode plate 200. Since burrs are present on the surface of the second tab 250, and burrs are also easily formed at the weld between the second tab and the second single-sided bare foil region 213, the third insulating adhesive layer 260 can also isolate the burrs, making the burrs less likely to come into contact with the first electrode plate 100 and in turn cause a short circuit or damage to the first electrode plate 100.

In some embodiments, along the length direction of the second current collector 210, a width of the fifth groove 223 is denoted as W23, and a width of the second tab 250 is denoted as P2, satisfying 5 mm ≤ W23 ≤ 15 mm, and 3 mm ≤ P2 ≤ 13 mm. For example, W23 may be 5 mm, 11 mm, or 15 mm; and P2 may be 3 mm, 9 mm, or 13 mm.

Along the length direction of the second current collector 210, the width W23 of the fifth groove 223 satisfies 5 mm ≤ W23 ≤ 15 mm. This allows the fifth groove 223 to have sufficient space to accommodate the second tab 250. In addition, this allows for a smaller volume loss of the third active material layer 220 and a higher energy density of the electrochemical apparatus provided with this electrode assembly 10.

In some embodiments, along the length direction of the second current collector 210, a width of the third insulating adhesive layer 260 is denoted as M3, satisfying 15 mm ≤ M3 ≤ 25 mm. For example, M3 may be 15 mm, 20 mm, or 25 mm. Along the thickness direction of the second current collector 210, the thickness of the third insulating adhesive layer 260 is denoted as N3, where 5 µm ≤ N3 ≤ 20 µm. For example, N3 may be 5 µm, 13 µm, or 20 µm.

Along the length direction of the second current collector 210, the width of the third insulating adhesive layer 260 is denoted as M3, satisfying 15 mm ≤ M3 ≤ 25 mm; and along the thickness direction of the second current collector 210, the thickness of the third insulating adhesive layer 260 is denoted as N3, where 5 µm ≤ N3 ≤ 20 µm. This allows for a good insulating effect of the third insulating adhesive layer 260, reducing the probability of a short circuit between the second tab 250 and the first electrode plate 100. In addition, this allows for a relatively small area of the third active material layer 220 covered by the third insulating adhesive layer 260, thereby allowing for a higher energy density of the electrochemical apparatus provided with this electrode assembly 10.

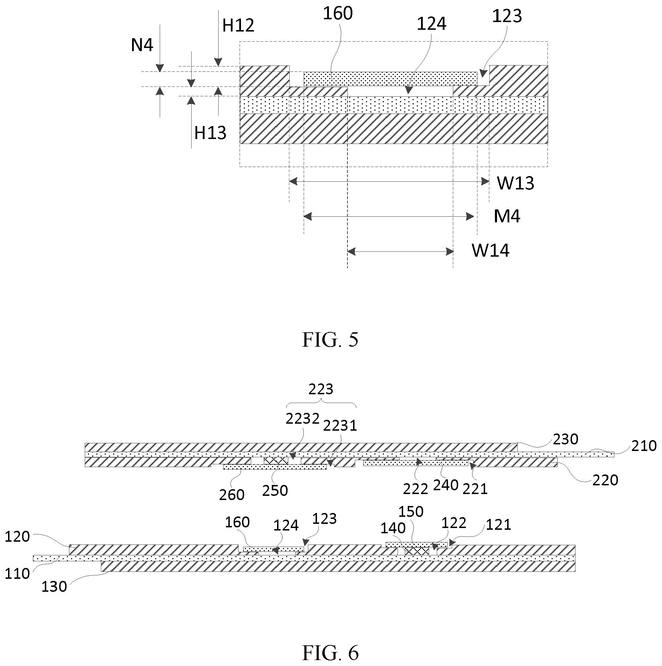

Referring to FIG. 3 and FIG. 5, FIG. 5 is a partially enlarged schematic structural diagram of position C in the electrode assembly in FIG. 3.

In some embodiments, the first active material layer 120 is further provided with a sixth groove 123. When viewed along the thickness direction of the first current collector 110, a projection of the third insulating adhesive layer 260 covers the sixth groove 123. The first electrode plate 100 further includes a fourth insulating adhesive layer 160, where the fourth insulating adhesive layer 160 is accommodated in the sixth groove 123.

The first active material layer 120 is provided with a sixth groove 123, so that the fourth insulating adhesive layer 160 of the first electrode plate 100 is accommodated in the sixth groove 123. This allows for a smaller overall thickness of the electrode assembly 10, and further allows for a higher energy density of the electrochemical apparatus provided with this electrode assembly 10. When viewed along the thickness direction of the first current collector 110, the projection of the third insulating adhesive layer 260 covers the sixth groove 123, so that the third insulating adhesive layer 260 can insulate the second tab 250 from the first electrode plate 100, reducing the probability of the burrs on the second tab 250 coming into contact with the first current collector 110, thereby reducing the probability of a short circuit between the first electrode plate 100 and the second electrode plate 200.

In some embodiments, along the length direction of the first current collector 110, a width of the sixth groove 123 is greater than or equal to a width of the fourth insulating adhesive layer 160. Along the thickness direction of the first current collector 110, a depth of the sixth groove 123 is greater than or equal to the thickness of the fourth insulating adhesive layer 160.

Along the length direction of the first current collector 110, the width of the sixth groove 123 is greater than or equal to the width of the fourth insulating adhesive layer 160; and along the thickness direction of the first current collector 110, the depth of the sixth groove 123 is greater than or equal to the thickness of the fourth insulating adhesive layer 160, so that the fourth insulating adhesive layer 160 can be accommodated in the sixth groove 123, thereby further allowing for a smaller overall thickness of the electrode assembly 10 and a higher energy density of the electrochemical apparatus provided with this electrode assembly 10.

In some other embodiments, along the thickness direction of the first current collector 110, the depth of the sixth groove 123 may alternatively be less than the thickness of the fourth insulating adhesive layer 160, so that a portion of the fourth insulating adhesive layer 160 can be accommodated in the sixth groove 123. Compared to an electrode plate without the sixth groove 123, the overall thickness of the first electrode plate 100 in this embodiment is smaller, increasing the energy density of the electrochemical apparatus.

In some embodiments, along the length direction of the first current collector 110, the width W13 of the sixth groove 123 satisfies 7 mm ≤ W13 ≤ 17 mm. For example, W13 may be 7 mm, 12 mm, or 17 mm. Along the thickness direction of the first current collector 110, the depth H12 of the sixth groove 123 satisfies 5 µm ≤ H12 ≤ 55 µm. For example, H12 may be 5 µm, 25 µm, or 55 µm.

Along the length direction of the first current collector 110, the width W13 of the sixth groove 123 satisfies 7 mm ≤ W13 ≤ 17 mm; and along the thickness direction of the first current collector 110, the depth H12 of the sixth groove 123 satisfies 5 µm ≤ H12 ≤ 55 µm. This allows a larger portion of the fourth insulating adhesive layer 160 to be accommodated in the sixth groove 123, thereby allowing for a smaller overall thickness of the electrode assembly 10 and a higher energy density of the electrochemical apparatus provided with this electrode assembly 10. In addition, this allows for a smaller volume loss of the first active material layer 120 and a higher energy density of the electrochemical apparatus provided with this electrode assembly 10.

In some embodiments, along the length direction of the first current collector 110, the width of the fourth insulating adhesive layer 160 is denoted as M4, satisfying 5 mm ≤ M4 ≤ 15 mm. For example, M4 may be 5 mm, 11 mm, or 15 mm. Along the thickness direction of the first current collector 110, the thickness of the fourth insulating adhesive layer 160 is denoted as N4, satisfying 5 µm ≤ N4 ≤ 20 µm. For example, N4 may be 5 µm, 12 µm, or 20 µm.

Along the length direction of the first current collector 110, the width M4 of the fourth insulating adhesive layer 160 satisfies 5 mm ≤ M4 ≤ 15 mm; and along the thickness direction of the first current collector 110, the thickness N4 of the fourth insulating adhesive layer 160 satisfies 5 µm ≤ N4 ≤ 20 µm. This allows for a good insulating effect of the fourth insulating adhesive layer 160, reducing the probability of a short circuit between the second tab 250 and the first electrode plate 100. In addition, this allows for a relatively small area of the first active material layer 120 covered by the fourth insulating adhesive layer 160, thereby allowing for a higher energy density of the electrochemical apparatus provided with this electrode assembly 10.

In some embodiments, the first active material layer 120 is further provided with a seventh groove 124 extending from a bottom wall of the sixth groove 123 to the first surface 111; and a projection of the second tab 250 along the thickness direction of the first current collector 110 is located within the seventh groove 124.

The first active material layer 120 is further provided with the seventh groove 124 extending from the bottom wall of the sixth groove 123 to the first surface 111, so that the projection of the second tab 250 along the thickness direction of the first current collector 110 is located within the seventh groove 124, and the first electrode plate 100 and the second electrode plate 200 are stacked. In addition, when the thickness of the second tab 250 is greater than the thickness of the third active material layer 220, the seventh groove 124 can be used for accommodating a portion of the second tab 250, thereby allowing for a smaller overall thickness of the electrode assembly 10 and a higher energy density of the electrochemical apparatus provided with this electrode assembly 10.

In some embodiments, along the length direction of the first current collector 110, a width of the seventh groove 124 is denoted as W14, satisfying 4 mm ≤ W14 ≤ 16 mm. For example, W14 may be 4 mm, 10 mm, or 16 mm. Along the thickness direction of the first current collector 110, a depth of the seventh groove 124 is denoted as H13, satisfying 10 µm ≤ H13 ≤ 60 µm. For example, H13 may be 10 µm, 30 µm, or 60 µm.

Along the length direction of the first current collector 110, the width W14 of the seventh groove 124 satisfies 4 mm ≤ W14 ≤ 16 mm; and along the thickness direction of the first current collector 110, the depth H13 of the seventh groove 124 satisfies 10 µm ≤ H13 ≤ 60 µm. This allows the seventh groove 124 to have sufficient space to accommodate the second tab 250. In addition, this allows for a smaller volume loss of the first active material layer 120 and a higher energy density of the electrochemical apparatus provided with this electrode assembly 10.

Referring to FIG. 6, FIG. 6 is a schematic structural cross-sectional view of an electrode assembly according to some other embodiments of this application.

In some other embodiments, the fifth groove 223 may include a first sub-groove 2231 and a second sub-groove 2232 extending from a bottom wall of the first sub-groove 2231 to the third surface 211. The third surface 211 at the second single-sided bare foil region 213 is exposed in the second sub-groove 2232. The second tab 250 is accommodated in the second sub-groove 2232. The third insulating adhesive layer 260 is accommodated in the first sub-groove 2231. This allows for a smaller overall thickness of the second electrode plate 200, thereby allowing for a higher energy density of the electrochemical apparatus provided with this electrode assembly 10.

In some embodiments, the first electrode plate 100 is a negative electrode plate, and the second electrode plate 200 is a positive electrode plate.

Since the first electrode plate 100 is a negative electrode plate and the second electrode plate 200 is a positive electrode plate, when viewed along the thickness direction of the second current collector 210, the projection of the second insulating adhesive layer 240 covers the first groove 121; and when viewed along the thickness direction of the first current collector 110, the projection of the third insulating adhesive layer 260 covers the sixth groove 123. This allows an area of a covered portion of the third active material layer 220 to be greater than an area of a covered portion of the first active material layer 120, thereby reducing the probability of metal ion precipitation in the electrochemical apparatus.

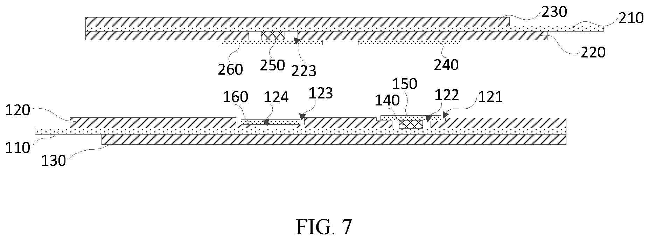

Referring to FIG. 7, FIG. 7 is a schematic structural cross-sectional view of an electrode assembly according to some other embodiments of this application.

An embodiment of this application provides an electrode assembly 10 including a first electrode plate 100 and a second electrode plate 200 having opposite polarities. The first electrode plate 100 includes a first current collector 110, a first active material layer 120, a second active material layer 130, a first tab 140, a first insulating adhesive layer 150, and a fourth insulating adhesive layer 160. The first active material layer 120 and the second active material layer 130 are respectively disposed on two surfaces of the first current collector 110. The first active material layer 120 is provided with a first groove 121 and a second groove 122. The first tab 140 is accommodated in the second groove 122 and welded to a first single-sided bare foil region 113. The first insulating adhesive layer 150 is accommodated in the first groove 121 and covers the weld between the first tab 140 and the first single-sided bare foil region 113. The first active material layer 120 is further provided with a sixth groove 123 and a seventh groove 124. The fourth insulating adhesive layer 160 is accommodated in the sixth groove 123.

The second electrode plate 200 includes a second current collector 210, a third active material layer 220, a fourth active material layer 230, a second tab 250, a second insulating adhesive layer 240, and a third insulating adhesive layer 260. The third active material layer 220 and the fourth active material layer 230 are respectively disposed on two surfaces of the second current collector 210. The third active material layer 220 is provided with a fifth groove 223. The second tab 250 is accommodated in the fifth groove 223 and welded to a second single-sided bare foil region 213. The third insulating adhesive layer 260 covers the weld between the second tab 250 and the second single-sided bare foil region 213. When viewed from a thickness direction of the second current collector 210, a projection of the second insulating adhesive layer 240 covers the first groove 121.

An embodiment of this application provides an electrochemical apparatus including the electrode assembly 10 according to any one of the above solutions.

An embodiment of this application provides an electric device including the electrochemical apparatus according to any one of the above solutions, where the electrochemical apparatus is configured to provide electrical energy to the electric device.

The electric device may be any one of the foregoing devices or systems using the electrochemical apparatus.

It should be noted that, in the absence of conflict, these embodiments and features in these embodiments of this application may be combined with each other.

The above are merely preferred embodiments of this application and are not intended to limit this application. For those skilled in the art, various modifications and variations may be made to this application. Any modifications, equivalent substitutions, improvements, and the like made within the spirit and principle of this application shall fall within the protection scope of this application.

## Claims

1. An electrode assembly, comprising a first electrode plate and a second electrode plate having opposite polarities, wherein the first electrode plate comprises:
a first current collector having a first surface and a second surface arranged opposite each other;
a first active material layer disposed on the first surface, wherein the first active material layer is provided with a first groove and a second groove extending from a bottom wall of the first groove to the first surface, the first current collector comprises a first single-sided bare foil region, and the first surface at the first single-sided bare foil region is exposed in the second groove;
a second active material layer disposed on the second surface, wherein the second surface at the first single-sided bare foil region is covered by the second active material layer;
a first tab accommodated in the second groove and welded to the first single-sided bare foil region to form a weld; and
a first insulating adhesive layer accommodated in the first groove and covering the weld between the first tab and the first single-sided bare foil region, wherein a projection of the first insulating adhesive layer along a thickness direction of the first current collector is located within the first groove.

2. The electrode assembly according to claim 1, wherein along a length direction of the first current collector, a width of the first groove is denoted as W11, and a width of the first insulating adhesive layer is denoted as M1, satisfying M1 ≤ W11, 7 mm ≤ W11 ≤ 17 mm, 5 mm ≤ M1 ≤ 15 mm; and along the thickness direction of the first current collector, a depth of the first groove is denoted as H11, and a thickness of the first insulating adhesive layer is denoted as N1, satisfying N1 ≤ H11, 5 µm ≤ H11 ≤ 55 µm, and 5 µm ≤ N1 ≤ 20 µm.

3. The electrode assembly according to claim 1, wherein along a length direction of the first current collector, a width of the second groove is denoted as W12, and a width of the first tab is denoted as P1, satisfying 5 mm ≤ W12 ≤ 15 mm, and 3 mm ≤ P1 ≤ 13 mm.

4. The electrode assembly according to claim 1, wherein the second electrode plate comprises:
a second current collector having a third surface and a fourth surface arranged opposite each other, wherein the third surface faces the first active material layer, and the fourth surface faces away from the first active material layer;
a third active material layer disposed on the third surface;
a fourth active material layer disposed on the fourth surface; and
a second insulating adhesive layer disposed on a side of the third active material layer facing away from the second current collector, wherein when viewed along a thickness direction of the second current collector, a projection of the second insulating adhesive layer covers the first groove.

5. The electrode assembly according to claim 4, wherein the third active material layer is provided with a third groove; the second insulating adhesive layer is accommodated in the third groove; and a projection of the second insulating adhesive layer along the thickness direction of the second current collector is located within the third groove.

6. The electrode assembly according to claim 5, wherein along a length direction of the second current collector, a width of the third groove is denoted as W21, and a width of the second insulating adhesive layer is denoted as M2, satisfying M2 ≤ W21, 17 mm ≤ W21 ≤ 27 mm, and 15 mm ≤ M2 ≤ 25 mm; and along the thickness direction of the second current collector, a depth of the third groove is denoted as H21, and a thickness of the second insulating adhesive layer is denoted as N2, satisfying N2 ≤ H21, 5 µm ≤ H21 ≤ 55 µm, and 5 µm ≤ N2 ≤ 20 µm.

7. The electrode assembly according to claim 5, wherein the third active material layer is further provided with a fourth groove extending from a bottom wall of the third groove to the third surface; a projection of the first tab along the thickness direction of the second current collector is located within the fourth groove; along a length direction of the second current collector, a width of the fourth groove is denoted as W22, satisfying 4 mm ≤ W22 ≤ 16 mm; and along the thickness direction of the second current collector, a depth of the fourth groove is denoted as H22, satisfying 10 µm ≤ H22 ≤ 60 µm.

8. The electrode assembly according to claim 4, wherein the third active material layer is provided with a fifth groove extending from the third active material layer to the third surface; the second current collector comprises a second single-sided bare foil region; the third surface at the second single-sided bare foil region is exposed in the fifth groove; and the second single-sided bare foil region is covered by the fourth active material layer on the fourth surface; and
the second electrode plate further comprises:
a second tab accommodated in the fifth groove and welded to the second single-sided bare foil region to form a weld; and
a third insulating adhesive layer covering the weld between the second tab and the second single-sided bare foil region.

9. The electrode assembly according to claim 8, wherein along a length direction of the second current collector, a width of the fifth groove is denoted as W23, and a width of the second tab is denoted as P2, satisfying 5 mm ≤ W23 ≤ 15 mm, and 3 mm ≤ P2 ≤ 13 mm.

10. The electrode assembly according to claim 8, wherein along a length direction of the second current collector, a width of the third insulating adhesive layer is denoted as M3, satisfying 15 mm ≤ M3 ≤ 25 mm; and along the thickness direction of the second current collector, a thickness of the third insulating adhesive layer is denoted as N3, wherein 5 µm ≤ N3 ≤ 20 µm.

11. The electrode assembly according to claim 8, wherein the first active material layer is further provided with a sixth groove; and when viewed along the thickness direction of the first current collector, a projection of the third insulating adhesive layer covers the sixth groove; and
the first electrode plate further comprises:
a fourth insulating adhesive layer accommodated in the sixth groove.

12. The electrode assembly according to claim 11, wherein along a length direction of the first current collector, a width of the sixth groove is greater than or equal to a width of the fourth insulating adhesive layer; and along the thickness direction of the first current collector, a depth of the sixth groove is greater than or equal to a thickness of the fourth insulating adhesive layer.

13. The electrode assembly according to claim 12, wherein along the length direction of the first current collector, the width of the sixth groove is denoted as W13, and the width of the fourth insulating adhesive layer is denoted as M4, satisfying 7 mm ≤ W13 ≤ 17 mm, and 5 mm ≤ M4 ≤ 15 mm; and along the thickness direction of the first current collector, the depth of the sixth groove is denoted as H12, and the thickness of the fourth insulating adhesive layer is denoted as N4, satisfying 5 µm ≤ H12 ≤ 55 µm, and 5 µm ≤ N4 ≤ 20 µm.

14. The electrode assembly according to claim 12, wherein the first active material layer is further provided with a seventh groove extending from a bottom wall of the sixth groove to the first surface; a projection of the second tab along the thickness direction of the first current collector is located within the seventh groove; along the length direction of the first current collector, a width of the seventh groove is denoted as W14, satisfying 4 mm ≤ W14 ≤ 16 mm; and along the thickness direction of the first current collector, a depth of the seventh groove is denoted as H13, satisfying 10 µm ≤ H13 ≤ 60 µm.

15. The electrode assembly according to claim 1, wherein the first electrode plate is a negative electrode plate, and the second electrode plate is a positive electrode plate.

16. The electrode assembly according to claim 1, wherein the first tab is formed on the first current collector by laser welding, and the second tab is formed on the second current collector by laser welding.

17. The electrode assembly according to claim 16, wherein the first tab is a negative electrode tab; the second tab is a positive electrode tab; the fifth groove comprises a first sub-groove and a second sub-groove; a projection of the second sub-groove along a thickness direction of the second current collector is located within the first sub-groove; along a width direction of the first tab, a distance between a side of the first tab and a corresponding groove wall of the first groove is denoted as a; and along a width direction of the second tab, a distance between a side of the second tab and a corresponding groove wall of the second sub-groove is denoted as b; wherein a and b satisfy: b < a.

18. The electrode assembly according to claim 17, wherein a ≥ 0.2 mm, and b ≥ 0.2 mm.

19. An electrochemical apparatus, comprising the electrode assembly according to any one of claims 1 to 18.

20. An electric device, comprising the electrochemical apparatus according to claim 19, wherein the electrochemical apparatus is configured to provide electrical energy.
